# EUROPEAN PATENT APPLICATION

(11) **EP 4 666 847 A1**
(43) Date of publication of application: **24.12.2025**
(21) Application number: 23941862.7
(22) Date of filing: 19.06.2023
(51) Int. Cl.: A01K 1/015

(54) **CAT LITTER FOR PETS AND PREPARATION PROCESS OF CAT LITTER**

(71) Applicant: Niu, Hongwu, Yancheng, Jiangsu 224000 (CN)
(72) Inventor: Niu, Hongwu, Yancheng, Jiangsu 224000 (CN)
(74) Representative: Murgitroyd & Company
(86) International application number: PCT/CN2023/100982
(87) International publication number: WO 2024/259554

(57) **Abstract**

The present invention relates to the field of cat litters. Disclosed are a cat litter for pets and a preparation process of the cat litter. The cat litter is prepared from the following raw materials: modified zeolite, Na-bentonite, a binder, a plant extractant, an additive, and water. By adding the plant extractant, the pH level of the cat litter can be monitored at any time, a health state of a cat is determined, and the risk of the cat getting sick is reduced. In addition, by adding different additives, economical and practical cat litters having advantages of reducing odor, making air fresh, and reducing the use amount can be obtained.

## Description

### TECHNICAL FIELD

The present invention relates to the field of cat litter and, in particular to a cat litter for pet use and a method of preparing the same.

### BACKGROUND

Cat litter is a substance for use by domestic cats to cover and hide their feces and urine. Cat litter is usually used with cat litter boxes. Pour an appropriate amount of cat litter into a cat litter box, and then a trained cat will spontaneously excrete feces and urine in the box. At present, cat litter products can be categorized by the materials from which they are made into bentonite, silica, wood, paper, tofu and plant fiber based ones. Among the several indicators for accessing cat litter products, deodorization (including removal of urine and other stinky odors), moisture absorbency, clumping, suitability to be flushed down a toilet after use, dust size and price are mostly considered by pet owners. Cat litter made of bentonite or silica is unsuitable to be flushed down a toilet after use, causing inconvenience to pet owners. Wood-based cat litter retains the inherent smell of wood, which would be unpleasant and not acceptable to some cat species. Paper-based cat litter tends to become pasty and difficult to clean due to absorption of moisture. The deodorizing performance of tofu-based cat litter is barely satisfactory, and its production involves dehydration process, which consumes much energy for moisture removal and makes the production expensive.

Considering the demand, scale and various performance requirements, cat litter products made of natural clay, in particular those containing bentonite as the main ingredient, will remain dominant on the market for a very long time in the future. Although there are various bentonite, silica, wood, paper and tofu based cat litter products currently available on the market, they all have unsatisfactory deodorizing performance and cannot provide any indications on the health of cats. Therefore, to know whether pet cats are healthy or not, owners have to visit pet hospitals with their cats on a regular basis for examination, or conduct tests on collected excrements of the cats. Consequently, health problems of the cats may not be noticed in a timely way, increasing their risk of illness.

### SUMMARY OF THE INVENTION

In order to solve the above technical problems, the present invention provides a cat litter for pet use and its preparation method, which can be monitored to determine a health condition of a cat and can achieve good deodorizing performance.

To achieve the above objective, the present invention provides the following technical solutions:
A cat litter for pet use made from raw materials including:
20-60 parts of modified zeolite, 40-100 parts of sodium bentonite, 100-260 parts of a binder, 8-20 parts of a plant extract, an additive and water.

In a preferred embodiment of the present invention, the binder is selected as one of polyacrylamide, carboxymethyl cellulose and water glass.

In a preferred embodiment of the present invention, the plant extract is selected as a powder of one of *Ipomoea nil* flowers, litmus lichen, *Matthiola incana* flowers and red cabbage.

In a preferred embodiment of the present invention, the additive includes one or more of an inorganic deodorant, a bactericide, a colorant and a perfuming agent,
wherein the inorganic deodorant is selected as one of phosphoric acid, aluminum dihydrogen phosphate and potassium dihydrogen phosphate,
wherein the colorant is selected as one of gentian violet and methylene blue,
wherein the perfuming agent is selected as one of a jasmine-scented substance, a rose-scented substance and a sweet osmanthus-scented substance.

The present invention also provides a method of preparing cat litter for pet use, which includes the steps of:
mixing modified zeolite and sodium bentonite to homogeneity and evenly spreading the resulting mixture in a pan;
separately diluting a binder and a plant extract with water and spraying the dilutions onto the mixture 2-3 times, followed by stirring;
selecting an appropriate additive according to a need, dissolving and diluting the additive with water, and spraying the dilution, followed by stirring; and
pressing the mixture that has undergone the spraying steps twice on a dough press, transforming the mixture into a sludge by adding water, extruding the sludge on a meat grinder into a desired shape, drying it at a constant temperature of 105 °C for 1 h and collecting it in bags.

In a preferred embodiment of the present invention, the modified zeolite is prepared by subjecting a raw zeolite material sequentially to crushing and screening, soaking in a 0.1-4 mol/L hydrogen chloride solution for 10-20 h, washing and drying, soaking in an inorganic salt solution for 10 h and washing and drying, and the obtained modified zeolite is finally washed and dried for storage.

In a preferred embodiment of the present invention, the bentonite is obtained by subjecting a raw bentonite material sequentially to crushing, drying at 105 °C for 5 h, spraying of a prepared sodium carbonate solution thereon, pressing into sheets on a dough press, aging in bags, drying of the aged sheets at 105 °C, pulverization on a sample preparer and sealing in bags for storage.

In a preferred embodiment of the present invention, the raw zeolite material is crushed and screened to a grain size of 5-80 mesh.

In a preferred embodiment of the present invention, after being crushed and screened, the raw zeolite material is baked at a temperature of 300-800 °C for 0.5-4 h.

In a preferred embodiment of the present invention, the inorganic salt solution is selected as a solution of one of sodium chloride, potassium chloride, aluminum chloride and magnesium chloride.

In summary, the present invention offers the following benefits:
Adding the plant extract allows pH monitoring of the cat litter for determining a health condition of a cat at any time, reducing its risk of illness.

Appropriate additives can be selectively added according to needs, imparting desirable properties to the cat litter, freshing the surrounding air and reducing the amount used, thereby making the cat litter cost-efficient.

The main ingredients, i.e., modified zeolite and sodium bentonite, both have good adsorption performance and stability and enable the cat litter to allow effective adsorption, achieve good odor control and maintain a desirable humidity. Using the plant extract and the binder as additives makes the cat litter more environmentally friendly, safe and good for health and enhances its coagulation and stability. The pressing, drying and other processes in the preparation method are simple and efficient and can ensure good quality and stability of the prepared cat litter.

### DETAILED DESCRIPTION

The present invention will be described clearly and fully below by way of specific embodiments thereof. Obviously, the embodiments set forth herein are merely some, but not all, of the possible embodiments of the present invention. Any and all other embodiments devisable by skilled persons in light of the disclosed embodiments without paying any creative effort are considered to fall within the scope of the present invention.

### EMBODIMENT 1

The present invention provides a cat litter for pet use, which is made from raw materials including, by weight: 20-60 parts of modified zeolite, 40-100 parts of sodium bentonite, 100-260 parts of a binder, 8-20 parts of a plant extract, an additive and water.

The binder is selected as one of polyacrylamide, carboxymethyl cellulose (CMC) and water glass.

Polyacrylamide exhibits good flocculating, binding, drag-reducing and thickening properties. Polyacrylamide can be used in the preparation of the cat litter mainly as a binding agent. Molecular chains of polyacrylamide can interact with dispersed phases in various mechanical, physical, chemical and other manner to tie them together into a network exhibiting improved strength.

As an important property, carboxymethyl cellulose can be prepared into high-viscosity colloids and solutions with a variety of desirable properties including binding, thickening, flowing, emulsifying and dispersing, shape-forming, moisture-retaining, protecting, film-forming, acid-resisting, salt-resisting and suspending, and is physiologically harmless. Therefore, it is extensively used in production in many industries including food, medicine, daily chemical, petroleum, papermaking, textile and construction. CMC can be used in the preparation of the cat litter mainly as a binding agent, as well as to increase the strength of the resulting product.

Water glass is a colorless, slightly colored transparent or translucent viscous liquid and can be used in the preparation of the cat litter mainly as a binding agent, as well as to increase the strength of the resulting cat litter product.

The plant extract is selected as a powder of one of *Ipomoea nil* flowers, litmus lichen, *Matthiola incana* flowers and red cabbage. If needed, different plant extracts may be added to the cat litter to allow it to change color in various pH ranges. Accordingly, the cat litter may change color when stained with urine of cat, and a health condition of the cat may be determined based on the color change, reducing its risk of illness. Apart from the cat litter of the present invention, such plant extracts may also be used in, for example, tofu-based, wood-based, pine-based, quartz-based and hybrid cat litters.

The additive includes one or more of an inorganic deodorant, a bactericide, a colorant and an perfuming agent. The inorganic deodorant may be selected as one of phosphoric acid, aluminum dihydrogen phosphate and potassium dihydrogen phosphate. The colorant may be selected as one of gentian violet and methylene blue. The perfuming agent may be selected as one of a jasmine-scented substance, a rose-scented substance and a sweet osmanthus-scented substance. One or more of these may be added, according to needs, as the additive to impart desirable properties to the cat litter, reduce unpleasant odors, fresh the surrounding air and reduce the amount used, thereby making the cat litter cost-efficient.

The present invention also provides a method of preparing cat litter for pet use, which includes the steps described below.

In Step 1, modified zeolite and sodium bentonite are mixed to homogeneity, and the mixture is then evenly spread in a pan.

A raw zeolite material is crushed, screened, soaked in a 0.1-4 mol/L hydrogen chloride solution for 10-20 h. After being washed and dried, it is again soaked in an inorganic salt solution for 10 h and then washed and dried. The resulting modified zeolite is finally washed, dried and stored.

The raw zeolite material is crushed and screened to a grain size of 5-80 mesh. Specifically, the original raw zeolite material has a grain size of greater than 100 mesh as collected and is crushed on a crusher to an appropriate grain size. The resulting grains are then passed through a standard sieve shaker, obtaining a first processed zeolite material with a grain size of 5-80 mesh. When zeolite grains with a larger size are immersed in the liquid as described below, the liquid will remain on the surface of the grains only but not penetrate into zeolite crystals. Therefore, impure or soluble substances in internal pores of the grains, which are detrimental to their adsorption performance, could not be leached out. On the other hand, zeolite grains with a smaller size tend to be blown away, resulting in low yield. Additionally, a smaller grain size means better ammonia and water absorption performance and less adverse influences. Therefore, according to the present invention, a zeolite grain size of 60 mesh is preferred.

The crushed and screened raw zeolite material is then baked at a temperature of 300-800 °C for 0.5-4 h. Baking at a higher temperature would enlarge pores in the zeolite and considerably reduce its specific surface area and therefore possibly lead to collapse of pore walls due to loss of moisture. Consequently, in the next processing step carried out in the solution for ion exchange and adsorption at the zeolite surface, less ammonia nitrogen would be adsorbed. Therefore, in the present embodiment, the baking temperature is preferred to be 400 °C.

The inorganic salt is selected as one of sodium chloride, potassium chloride, aluminum chloride and magnesium chloride. Soaking the zeolite in the inorganic salt solution allows exchange between ions from the zeolite and ions in the inorganic salt solution, increasing ammonia nitrogen adsorption of the modified zeolite and thus enhancing its deodorizing performance.

In the present embodiment, preferably use HCL solution with a concentration of 1.0 mol/L, and the zeolite is modified for 15 h. This allows removal of 58.70% of ammonia nitrogen.

A raw bentonite material is crushed and dried at 105 °C for 5 h, and a sodium carbonate solution is prepared and sprayed on the raw material. The raw material is pressed into sheets on a dough press, which are then aged in bags and dried at 105 °C. The sheets are pulverized on a sample preparer and sealed in bags for storage, obtaining the sodium bentonite, which can enhance moisture absorption of the resulting cat litter and shows good sodiumization effect.

In Step 2, a binder and a plant extract are separately diluted with water and sprayed on the mixture 2-3 times, followed by stirring.

In Step 3, an appropriate additive is selected according to needs and dissolved in water. The resulting solution is diluted and sprayed, followed by stirring.

In Step 4, the mixture that have undergone the spraying steps is pressed twice on a dough press, and water is then added to transform it into a sludge, which is then extruded into a desired shape on a meat grinder, dried at a constant temperature of 105 °C for 1 h and collected in bags. Herein, pressing the mixture enables even more homogenous dispersion of the additives.

The main ingredients, i.e., modified zeolite and sodium bentonite, both have good adsorption performance and stability and enable the resulting cat litter to allow effective adsorption, achieve good odor control and maintain a desirable humidity. Using the plant extract and the binder as additives makes the cat litter more environmentally friendly, safe and good for health and enhances its coagulation and stability. The pressing, drying and other processes in the preparation method are simple and efficient and can ensure good quality and stability of the prepared cat litter.

### EMBODIMENT 2

The preparation method of this embodiment is similar to that of Embodiment 1, except for omitting the operations in Step 2 related to the plant extract and omitting Step 3. The cat litter prepared in this embodiment includes by weight 15 parts of modified zeolite, 97 parts of sodium bentonite, 200 parts of a binder selected as water glass and an appropriate amount of water.

### EMBODIMENT 3

The preparation method of this embodiment is similar to that of Embodiment 1, except for omitting the operations in Step 2 related to the plant extract and omitting Step 3. The cat litter prepared in this embodiment includes by weight 25 parts of modified zeolite, 95 parts of sodium bentonite, 200 parts of a binder selected as water glass and an appropriate amount of water.

### EMBODIMENT 4

The preparation method of this embodiment is similar to that of Embodiment 1, except for omitting the operations in Step 2 related to the plant extract and omitting Step 3. The cat litter prepared in this embodiment includes by weight 35 parts of modified zeolite, 93 parts of sodium bentonite, 200 parts of a binder selected as water glass and an appropriate amount of water.

### EMBODIMENT 5

The preparation method of this embodiment is similar to that of Embodiment 1, except for omitting the operations in Step 2 related to the plant extract and omitting Step 3. The cat litter prepared in this embodiment includes by weight 50 parts of modified zeolite, 90 parts of sodium bentonite, 200 parts of a binder selected as water glass and an appropriate amount of water.

### EMBODIMENT 6

The preparation method of this embodiment is similar to that of Embodiment 1, except for omitting the operations in Step 2 related to the plant extract and omitting Step 3. The cat litter prepared in this embodiment includes by weight 60 parts of modified zeolite, 85 parts of sodium bentonite, 200 parts of a binder selected as water glass and an appropriate amount of water.

The results of the above cat litter preparation methods are summarized in the table below.

| No. | Ammonia Adsorption mmol/100g | Moisture Absorption % | Clumping Strength g | Bulk Density g/ml |
|---|---|---|---|---|
| Embodiment 2 | 55 | 360 | 765 | 0.79 |
| Embodiment 3 | 61 | 345 | 750 | 0.78 |
| Embodiment 4 | 65 | 340 | 690 | 0.81 |
| Embodiment 5 | 69 | 330 | 630 | 0.81 |
| Embodiment 6 | 70 | 315 | 595 | 0.83 |

As can be seen from the data in the above table, increases in the zeolite content can improve deodorizing performance of the resulting cat litter but reduce its clumping strength and moisture absorption to various extents. Therefore, an excessive zeolite content is undesirable. Depending on the market demand, a bulk density less than 0.8 g/ml is desirable for the cat litter. Accordingly, the method of Embodiment 3 is most preferred.

The foregoing description of the embodiments disclosed herein is presented to enable those skilled in the art to implement or use the present application. Various modifications to these embodiments are apparent to those skilled in the art, and the general principles defined herein may be embodied in other embodiments without departing from the spirit or scope of the present invention. Accordingly, the invention is not limited to the embodiments disclosed herein. Rather it is intended to have the broadest scope consistent with the principles and novel features disclosed herein.

## Claims

1. A cat litter for pet use, made from raw materials comprising:
20-60 parts of modified zeolite, 40-100 parts of sodium bentonite, 100-260 parts of a binder, 8-20 parts of a plant extract, an additive and water.

2. The cat litter for pet use according to claim 1, wherein the binder is one selected from polyacrylamide, carboxymethyl cellulose and water glass.

3. The cat litter for pet use according to claim 1, wherein the plant extract is a powder of one selected from *Ipomoea nil* flowers, litmus lichen, *Matthiola incana* flowers and red cabbage.

4. The cat litter for pet use according to claim 1, wherein the additive comprises one or more of an inorganic deodorant, a bactericide, a colorant and a perfuming agent,
wherein the inorganic deodorant is one selected from phosphoric acid, aluminum dihydrogen phosphate and potassium dihydrogen phosphate,
wherein the colorant is one selected from gentian violet and methylene blue,
wherein the perfuming agent is one selected from a jasmine-scented substance, a rose-scented substance and a sweet osmanthus-scented substance.

5. A method of preparing the cat litter for pet use according to any one of claims 1 to 4, comprising the steps of:
mixing modified zeolite and sodium bentonite to homogeneity and evenly spreading the resulting mixture in a pan;
separately diluting a binder and a plant extract with water and spraying the dilutions onto the mixture 2-3 times, followed by stirring;
selecting an appropriate additive according to a need, dissolving and diluting the additive with water, and spraying the dilution, followed by stirring; and
pressing the mixture that has undergone the spraying steps twice on a dough press, transforming the mixture into a sludge by adding water, extruding the sludge on a meat grinder into a desired shape, drying at a constant temperature of 105 °C for 1 h and collecting in bags.

6. The method of preparing the cat litter for pet use according to claim 5, wherein the modified zeolite is prepared by subjecting a raw zeolite material sequentially to crushing and screening, soaking in a 0.1-4 mol/L hydrogen chloride solution for 10-20 h, washing and drying, soaking in an inorganic salt solution for 10 h and washing and drying, and the obtained modified zeolite is finally washed and dried for storage.

7. The method of preparing the cat litter for pet use according to claim 5, wherein the bentonite is obtained by subjecting a raw bentonite material sequentially to crushing, drying at 105 °C for 5 h, spraying of a prepared sodium carbonate solution thereon, pressing into sheets on a dough press, aging in bags, drying of the aged sheets at 105 °C, pulverization on a sample preparer and sealing in bags for storage.

8. The method of preparing the cat litter for pet use according to claim 6, wherein the raw zeolite material is crushed and screened to a grain size of 5-80 mesh.

9. The method of preparing the cat litter for pet use according to claim 6, wherein after being crushed and screened, the raw zeolite material is baked at a temperature of 300-800 °C for 0.5-4 h.

10. The method of preparing the cat litter for pet use according to claim 6, wherein the inorganic salt solution is a solution of one selected from sodium chloride, potassium chloride, aluminum chloride and magnesium chloride.
